# EUROPEAN PATENT SPECIFICATION

(11) **EP 0 405 860 B1**
(45) Date of publication and mention of the grant of the patent: **02.08.1995**
(21) Application number: 90306857.5
(22) Date of filing: 22.06.1990
(51) Int. Cl.: B62D 5/06, B62D 6/02

(54) **Power assisted steering mechanism**
Hilfskraftlenkung
Mécanisme de direction assistée

(30) Priority: 28.06.1989 GB 8914820
(43) Date of publication of application: 02.01.1991
(73) Proprietor: ADWEST ENGINEERING LIMITED, Reading RG5 4SN, Berkshire (GB)
(72) Inventor: Chandler, Kenneth, Lower Earley, Reading RG5 4SN (GB); McQuiggan, James Barnet, Earley, Reading (GB)
(74) Representative: Dealtry, Brian

(56) References cited:
- EP-A- 0 316 235
- FR-A- 2 065 286
- US-A- 4 453 615

## Description

This invention relates to power assisted steering mechanisms for vehicles.

It has long been recognised in the art of power assisted steering that maximum power assistance is required during low-speed manoeuvres, such as parking and cornering, and that at higher speeds it is desirable to reduce the power assistance to increase road "feel". Thus, it is desirable that the amount of power assistance be varied as a function of vehicle speed so as to increase the power assistance with decreasing vehicle speed and decrease the power assistance with increasing vehicle speed.

Generally, power assisted steering mechanisms for vehicles comprise double-acting piston-and-cylinder means and a control valve for directing fluid under pressure from a source thereof, usually an engine driven pump, to one side or the other of the said piston in response to steering movement of a steering control of the vehicle to provide power assistance in steering the steerable road wheels of the vehicle. One prior art proposal for providing varying amounts of power assistance as a function of vehicle speed has been to vary the output of the pump supplying the fluid under pressure as a function of vehicle speed, so that the output of the pump is increased with decreasing vehicle speed and is decreased with increasing vehicle speed. Another prior art proposal has been to provide a bypass between the fluid supply to the control valve and the return from the control valve and to control the flow of fluid through said bypass as a function of vehicle speed, so that as the vehicle speed decreases the flow of fluid through the bypass is decreased to increase the power assistance and as the vehicle speed increases so the flow of fluid through the bypass is increased to decrease the power assistance. Both of these prior proposals suffer from disadvantages. The engine driven pump supplying the fluid under pressure is normally engine speed related and not vehicle speed related and complicated electronic controls are required to relate the output of the pump to vehicle speed and not to engine speed. Providing a bypass upstream of the control valve can result in fluid starvation to the cylinder of the double-acting piston-and-cylinder means in response to rapid movements of the steering control, e.g. steering wheel, of the vehicle. Moreover, with both of these prior proposals the steering characteristics are such as to give little or no "feel" in the middle steering range and a too abrupt transition to full power assistance during low-speed manoeuvres such as cornering and parking.

EP-A-0316235, which corresponds to the preamble of claim 1, discloses a power assisted steering mechanism for a vehicle having double-acting piston-and-cylinder means with a cylinder chamber on each side of the piston, a control valve for directing fluid under pressure from a source thereof to one or the other of the cylinder chambers in response to steering movements of a steering control to provide power assistance in steering the steerable road wheels of the vehicle, a bypass connecting said cylinder chambers with one another and speed responsive means controlling the flow of fluid under pressure through said bypass as a function of vehicle speed to increase the power assistance with decreasing vehicle speed and decrease the power assistance with increasing vehicle speed. The speed responsive means comprises a valve having a spool provided with at least one frusto-conical portion which is movable into and out of an orifice, eg in response to movements of a throttle pedal, to control the flow of fluid under pressure through said orifice and hence through said bypass.

US 4453615 discloses a speed responsive power assisted steering mechanism which also includes a by-pass and a valve for controlling fluid flow along the by-pass. The valve disclosed in US 4453615 operates only to fully open or close flow along the by-pass and does not meter flow therealong.

FR-A-2065286 also discloses a speed responsive power assisted steering mechanism which includes a by-pass and a valve for controlling fluid flow along the by-pass. The valve disclosed in FR-A-2065286 is hydraulically operated in order to vary flow along the by-pass.

The present invention has as its object to provide a power assisted steering mechanism in which the amount of power assistance is varied as a function of vehicle speed, which provides a more precise, metered, flow of fluid under pressure through a bypass connecting the cylinder chambers and which provides more controlled steering characteristics.

The present invention provides a power assisted steering mechanism for a vehicle, comprising double-acting piston-and-cylinder means having a cylinder chamber (5a,5b) on each side of the piston (4), a control valve (7) for directing fluid under pressure from a source (13,16) thereof to one or the other of said cylinder chambers (5a,5b) in response to steering movements of a steering control of the vehicle to provide power assistance in steering the steerable road wheels of the vehicle, a bypass (20) connecting said cylinder chambers (5a,5b) with one another and speed responsive means (21) comprising a valve (22) in the bypass (20) controlling the flow of fluid through said bypass (20) as a function of vehicle speed, the valve (22) comprising a housing (25) having first and second ports (39,42) therein connected to bypass (20), the housing (25) also having a bore (26) therein and a valve spool (32) slidable within said bore (26), the fluid under pressure from said source being metered through said by-pass as a function of vehicle speed to increase the power assistance with decreasing vehicle speed and decrease the power assistance with increasing vehicle speed characterised in that said spool (32) has an annular groove (41) which communicates with said first port (39) and said bore (26) has an annular groove (50) formed in the wall thereof which communicates with said second port (42), said annular groove (41) of the spool co-operating with said annular groove (50) in the wall of the bore (26) to meter the flow of fluid under pressure through the valve (22) and hence through the bypass (20), the spool (32) being spring biased in one axial direction, a solenoid (52) being mounted in the housing (25) to act upon the spool (32) to cause axial displacement against said bias and means (23,24) for sensing the speed of the vehicle and for providing a variable electrical output to said solenoid according to the varying speeds of the vehicle to cause axial displacement of the spool (32) in response to the vehicle speed.

Said control valve may be a rotary valve having an inlet port connected to a source of fluid under pressure, e.g. a fluid pump, an outlet port connectable to a reservoir for the pressure fluid and a rotor which is angularly displaceable in response to steering movements of the steering control of the vehicle to meter fluid under pressure from said inlet port to one of said first and second cylinder ports and to connect the other of said first and second cylinder ports to said outlet port.

Surprisingly, it has been found that providing the bypass downstream of the control valve between the cylinder chambers substantially avoids the danger of fluid starvation to the cylinder in response to rapid movements of the steering control and provides improved steering characteristics over the prior art proposals. In particular, the steering has better "feel" in the middle range and a more gradual transition to full power steering during low-speed manoeuvres.

The invention will be more particularly described with reference to the accompanying drawings, in which:-
Figure 1 is a diagrammatic illustration of a power-assisted steering mechanism according to the present invention;
Figure 2 is a sectional elevation on a larger scale of a speed sensitive valve used in the steering mechanism of Figure 1.
Figure 3 is a plan view of the speed sensitive valve of Figure 2; and
Figure 4 is a section on the line 4-4 of Figure 2.

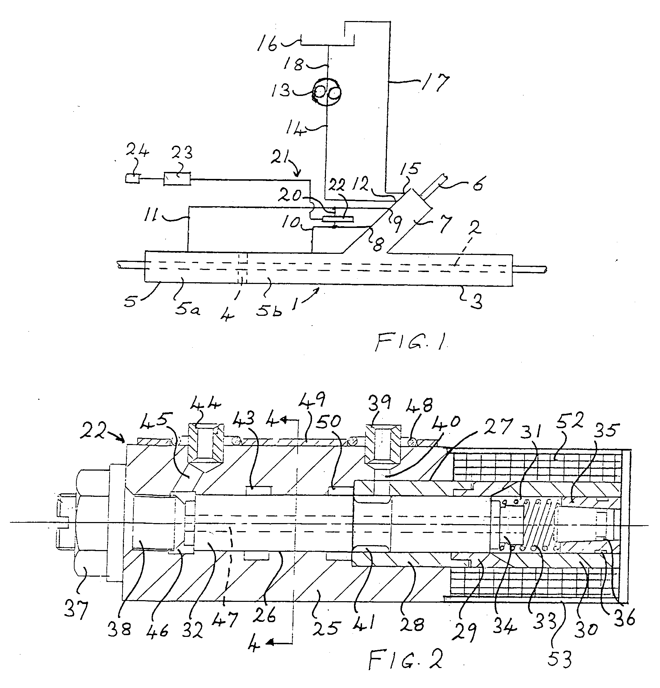

The steering mechanism illustrated in Figure 1 of the drawings comprises a rack-and-pinion steering mechanism 1 having a toothed rack 2 mounted for longitudinal movement in a housing 3. A double-acting piston 4 is mounted on the rack 2 and is slideable within a cylinder 5 defined by the housing 3. The pinion (not shown) of the rack-and-pinion steering mechanism is connected to the steering control (not shown) of a vehicle by way of a steering column 6 and control valve 7 in conventional manner. Control valve 7 is a rotary control valve of a kind well-known in the art having a first cylinder port 8 connected to a cylinder chamber 5a on one side of the piston 4 by a first fluid conduit 10, a second cylinder port 9 connected to the cylinder 5 on the other side of the piston 4 by a second fluid conduit 11, an inlet port 12 connected to an engine driven pump 13 by way of a fluid conduit 14 and an outlet port 15 connected to a fluid reservoir 16 by way of a fluid conduit 17. Engine driven pump 13 is connected to the reservoir 16 by a fluid conduit 18. The rotary control valve 7 further comprises a rotor (not shown) which is angularly displaceable in response to turning movements of the steering control of the vehicle to direct fluid under pressure from the pump 13 to one of the first or second ports 8 and 9 and to connect the other of the cylinder ports 8 and 9 to the reservoir 16 to provide power assistance in the required direction.

In accordance with the present invention a bypass 20 is provided between the first fluid conduit 10 and the second fluid conduit 11, and hence between the cylinder chambers 5a, 5b and speed responsive means 21 is provided for controlling the flow of fluid under pressure through the bypass 20 as a function of vehicle speed. Speed responsive means 21 comprises a solenoid-operated spool valve 22, a control unit 23 and vehicle speed sensing means 24. Vehicle speed sensing means 24 provides electrical signals to the control unit 23 according to the speed of the vehicle and the control unit 23 provides a variable electrical output to the solenoid of the spool valve 22 to vary the position of the spool of the spool valve 22 as a function of vehicle speed so that as the vehicle speed decreases the flow of fluid through the bypass 20 is decreased to increase the flow of fluid under pressure to the cylinder 5 and increase the power assistance and as the vehicle speed increases to increase the flow of fluid through the bypass 20 to decrease the flow of fluid under pressure to the cylinder 5 and so decrease the power assistance.

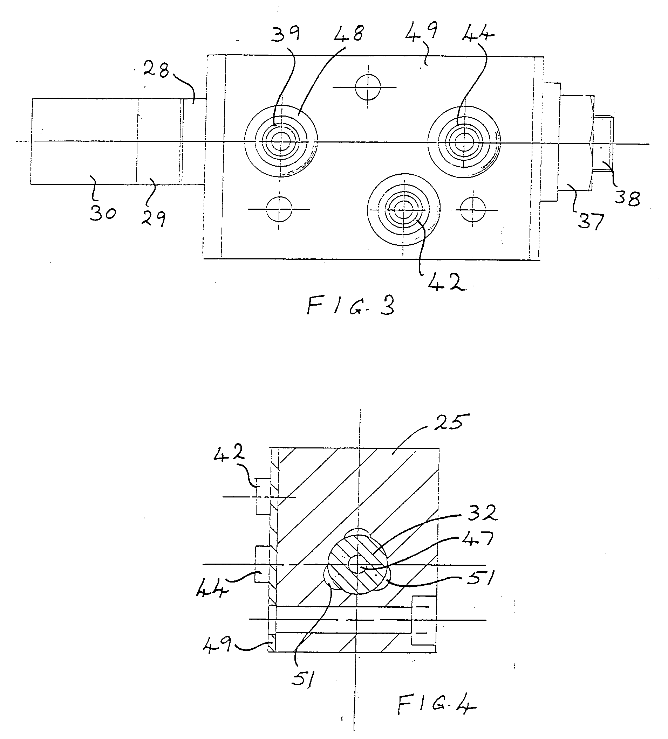

Referring now to Figures 2, 3 and 4 it will be seen that the speed responsive solenoid-operated spool valve 22 comprises a housing 25 having a through bore 26 extending axially thereof and a counter bore 27 in which is mounted a stop-off ring 28. Connected to the stop-off ring 28 is an annular non-magnetic ring 29 which in turn has connected thereto a spigot ring 30. The rings 28, 29 and 30 are coaxial with and have the same internal diameter as the through bore 26 and define with the through bore 26 a cylindrical chamber 31 in which is slideably mounted a valve spool 32. A helical compression spring 33 abuts at one end against a shoulder defined by a flange at one end of a non-magnetic spacer 34 of reduced diameter which bears against an end of the valve spool 32 and at its other end bears against a plug 35 secured within the outer end of the spigot ring 30 with the inter-position of suitable sealing rings 36. To the opposite end of the housing 25 from the stop-off ring 28 is secured a nut 37 in which is threadedly engaged an adjusting screw 38 which bears on one end of the spool 32 and enables correct adjustment of the position of the spool 32 following assembly. A first port 39 in the housing 25 communicates by way of a radial passage 40 with an annular groove 41 in the valve spool 32. A second port 42 in the housing 25 communicates by way of a passage (not shown) with an annular groove 43 in the housing 25. A third port 44 in the valve housing 25 communicates by way of a passage 45 with a chamber 46 adjacent one end of the valve spool 32. Ports 39 and 42 have bypass 20 connected thereto. Port 44 is connected to the reservoir 16 (Figure 1) and serves to conduct pressure fluid which leaks past the spool 32 back to reservoir, to prevent air locks within the chamber 31 and to equalize the pressures on either end of the spool 32, to which end the spool 32 has a passage 47 extending axially therethrough. O-ring seals 48 are provided around each of the ports 39, 42 and 44 for providing a seal when conduits forming the bypass 20 and connecting the port 44 to reservoir are connected to the ports 39, 42 and 44, the O-rings being located in apertures in a face plate 49.

Housing 25 has, in addition to the annular groove 43, an annular groove 50 which communicates with the annular groove 43 by way of longitudinally extending passages 51 (Figure 3). Spool 32 is movable against the bias of the spring 33 by a solenoid 52 contained within a housing 53.

Fluid flow through the bypass 20, and hence through the valve 22, can be in either direction depending upon the steering direction and to which of the cylinder chambers 5a, 5b fluid under pressure is being directed. Thus, the fluid flow through the valve 22 can be either from the port 39 by way of passage 40, annular groove 41, annular groove 50, passages 51 and annular groove 43 to the port 42 or by way of the port 42, annular groove 43, passages 51, annular groove 50, annular groove 41 and passage 40 to the port 39. Either way the fluid flowing through the valve 22 is metered over the adjacent edges of the annular groove 41 and the annular groove 50 according to the position of the spool 32 and the amount of overlap between the annular groove 41 and the annular groove 50 to control the fluid flow through the valve 22 and hence through the bypass 20. If desired at least one of the cooperating adjacent edges of the grooves 41 and 50 can be formed to provide required fluid metering characteristics.

In the operation of the steering mechanism illustrated in the drawings, the speed sensing means 24 senses the speed of the vehicle and provides electrical signals indicative of the speed sensed to the control unit 23 which in turn provides a variable electrical output to the solenoid 52 of the valve 22 to so position the spool 32 that as the vehicle speed decreases so the flow of fluid under pressure through the valve 22, and hence through the bypass 20, is reduced to increase the power assistance provided by the steering mechanism and as the vehicle speed increases to increase the flow of fluid through the valve 22, and hence through the bypass 20, to decrease the amount of power assistance provided by the steering mechanism. Thus the amount of power assistance provided by the steering mechanism is a function of the vehicle speed.

Although, for reasons of clarity, the spool valve 22 has been diagrammatically shown in Figure 1 as being inserted in the bypass 20, it is preferred that spool valve 22 be mounted on the control valve 7 and that the ports 39,42 and 44 of the spool valve 22 be connected to the ports 8,9 and 15 respectively of the control valve 7 within the body of the control valve 7.

## Claims

1. A power assisted steering mechanism for a vehicle, comprising double-acting piston-and-cylinder means having a cylinder chamber (5a,5b) on each side of the piston (4), a control valve (7) for directing fluid under pressure from a source (13,16) thereof to one or the other of said cylinder chambers (5a,5b) in response to steering movements of a steering control of the vehicle to provide power assistance in steering the steerable road wheels of the vehicle, a bypass (20) connecting said cylinder chambers (5a,5b) with one another and speed responsive means (21) comprising a valve (22) in the bypass (20) controlling the flow of fluid through said bypass (20) as a function of vehicle speed, the valve (22) comprising a housing (25) having first and second ports (39,42) therein connected to bypass (20), the housing (25) also having a bore (26) therein and a valve spool (32) slidable within said bore (26), the fluid under pressure from said source being metered through said by-pass as a function of vehicle speed to increase the power assistance with decreasing vehicle speed and decrease the power assistance with increasing vehicle speed characterised in that said spool (32) has an annular groove (41) which communicates with said first port (39) and said bore (26) has an annular groove (50) formed in the wall thereof which communicates with said second port (42), said annular groove (41) of the spool co-operating with said annular groove (50) in the wall of the bore (26) to meter the flow of fluid under pressure through the valve (22) and hence through the bypass (20), the spool (32) being spring biased in one axial direction, a solenoid (52) being mounted in the housing (25) to act upon the spool (32) to cause axial displacement against said bias and means (23,24) for sensing the speed of the vehicle and for providing a variable electrical output to said solenoid according to the varying speeds of the vehicle to cause axial displacement of the spool (32) in response to the vehicle speed.

2. A steering mechanism according to claim 1 wherein the spool (32) is biased to one axial end of the housing (25), the housing being provided with an adjustment screw (38) which abuts against an end of the spool (32) adjacent said one axial end of the housing in order to provide adjustment of the position of the spool.

3. A steering mechanism according to claim 1 or 2 wherein the spool (32) includes a passageway (47) extending axially through the spool to provide fluid communication between opposite ends of the spool (32), and wherein one end of the housing (25) is provided with a port (44) connected to a reservoir to permit pressure equalisation at either end of the spool (32) and to permit pressurised fluid to drain from the housing (25).

4. A steering mechanism according to any one of the preceding claims, wherein said control valve (7) comprises a first cylinder port (8) connected by a first fluid passage (10) to one of said cylinder chambers (5a) and a second cylinder port (9) connected by a second fluid passage (11) to the other of said cylinder chambers (5b) and wherein said bypass (20) connects said first and second fluid passages (10,11).

5. A steering mechanism according to claim 4, wherein said control valve (7) is a rotary valve having an inlet port (12) connectable to a source of fluid under pressure (13,16), an outlet port (15) connectable to a reservoir (16) for the pressure fluid and a rotor which is angularly displaceable in response to steering movements of the steering control of the vehicle to meter fluid under pressure from said inlet port (12) to one of said first and second cylinder ports (8,9) and to connect the other of said first and second cylinder ports (8,9) to said outlet port (15).

6. A vehicle when provided with a power assisted steering mechanism according to any one of the preceding claims.

## Patentansprüche

1. Hilfskraft- bzw. Servolenkungsmechanismus für ein (Kraft-)Fahrzeug, umfassend eine doppelt wirkende Kolben-Zylindereinheit mit (je) einer Zylinderkammer (5a, 5b) an jeder Seite des Kolbens (4), ein Steuerventil (7) zum Leiten von Druckfluid von einer Quelle (13, 16) desselben zur einen oder anderen Zylinderkammer (5a, 5b) in Abhängigkeit von Lenkbewegungen eines Lenksteuerorgans des Fahrzeugs zwecks Gewährleistung von Kraft- bzw. Servounterstützung beim Lenken der lenkbaren Laufräder des Fahrzeugs, eine die Zylinderkammern (5a, 5b) miteinander verbindende Überbrückung (20) und ein geschwindigkeitsabhängiges Mittel (21) mit einem Ventil (22) in der Überbrückung (20) zum Steuern oder Regeln des Fluidstroms durch die Überbrückung (20) als Funktion der Fahrzeuggeschwindigkeit, welches Ventil (22) ein Gehäuse (25) mit ersten und zweiten, mit der überbrückung (20) verbundenen Zulässen (39, 42) aufweist, wobei das Gehäuse (25) auch eine darin geformte Bohrung (26) und einen in der Bohrung (26) verschiebbaren Ventil-Steuerschieber (32) aufweist und wobei das Druckfluid von der Quelle durch oder über die Überbrückung als Funktion der Fahrzeuggeschwindigkeit zugemessen bzw. dosiert wird, um die Servounterstützung mit abnehmender Fahrzeuggeschwindigkeit zu erhöhen und die Servounterstützung mit Zunehmender Fahrzeuggeschwindigkeit zu verringern, dadurch gekennzeichnet, daß der Steuerschieber (32) eine mit dem ersten Zulaß (39) kommunizierende Ringnut (41) und die Bohrung (26) eine in ihrer Wand geformte, mit dem zweiten Zulaß (42) kommunizierende Ringnut (50) aufweisen, die Ringnut (41) des Steuerschiebers mit der Ringnut (50) in der Wand der Bohrung (26) zusammenwirkt, um den Strom des Druckfluids durch das Ventil (22) und mithin durch die Überbrückung (20) zu dosieren, der Steuerschieber (32) in der einen Axialrichtung vorbelastet ist, im Gehäuse (25) ein Solenoid (52) montiert ist, das auf den Steuerschieber (32) einwirkt, um eine Axialverschiebung gegen die Vorbelastung herbeizuführen, und Mittel (23, 24) zum Messen der Geschwindigkeit des Fahrzeugs und zum Liefern eines variablen elektrischen Ausgangssignals zum Solenoid entsprechend den variierenden Geschwindigkeiten des Fahrzeugs zwecks Herbeiführung einer Axialverschiebung des Steuerschiebers (32) in Abhängigkeit von der Fahrzeuggeschwindigkeit (vorgesehen sind).

2. Lenkungsmechanismus nach Anspruch 1, wobei der Steuerschieber (32) zum einen axialen Ende des Gehäuses (25) hin vorbelastet ist und das Gehäuse mit einer Einstellschraube (38) versehen ist, die sich an ein Ende des Steuerschiebers (32) nahe dem (im Bereich des) einen axialen Ende(s) des Gehäuses anlegt, um eine Einstellung der Stellung des Steuerschiebers zu gewährleisten.

3. Lenkungsmechanismus nach Anspruch 1 oder 2, wobei der Steuerschieber (32) einen ihn axial durchsetzenden Durchgang (47) zur Herstellung einer Fluidverbindung zwischen gegenüberliegenden Enden des Steuerschiebers (32) aufweist und wobei ein Ende des Gehäuses (25) mit einem an ein Reservoir angeschlossenen Zulaß (44) versehen ist, um einen Druckausgleich an jedem (an beiden) Ende(n) des Steuerschiebers (32) zu ermöglichen und Druckfluid aus dem Gehäuse (25) ablassen zu können.

4. Lenkungsmechanismus nach einem der vorangehenden Ansprüche, wobei das Steuerventil (7) einen mittels einer ersten Fluidleitung (10) mit einer der Zylinderkammern (5a) verbundenen ersten Zylinderzulaß (8) und einen mittels einer zweiten Fluidleitung (11) mit der anderen Zylinderkammer (5b) verbundenen zweiten Zylinderzulaß (9) aufweist und wobei die Überbrückung (20) die ersten und zweiten Fluidleitungen (10, 11) (miteinander) verbindet.

5. Lenkungsmechanismus nach Anspruch 4, wobei das Steuerventil (7) ein Drehschieber mit einem an eine Druckfluidquelle (13, 16) anschließbaren Einlaß (12), einem mit einem Reservoir (16) für das Druckfluid verbindbaren Auslaß (15) und einem Rotor ist, welcher Rotor in Abhängigkeit von Lenkbewegungen des Lenksteuerorgans des Fahrzeugs über einen Winkel verschiebbar ist, um Druckfluid vom Einlaß (12) zu einem der ersten und zweiten Zylinderzulässe (8, 9) zuzumessen bzw. zu dosieren und den anderen der ersten und zweiten Zylinderzulässe (8, 9) mit dem Auslaß (15) zu verbinden.

6. (Kraft-)Fahrzeug, das mit einem Servolenkungsmechanismus nach einem der vorangehenden Ansprüche versehen ist.

## Revendications

1. Mécanisme de direction assistée pour un véhicule, comprenant un moyen à piston et cylindre à double action ayant une chambre de cylindre (5a, 5b) de chaque côté du piston (4), une vanne de commande (7) pour diriger du fluide sous pression depuis une source (13, 16) de ce dernier vers l'une ou l'autre desdites chambres de cylindre (5a, 5b), en réponse à des mouvements de direction d'une commande de direction du véhicule pour fournir une assistance motrice dans la direction des roues orientables du véhicule, une dérivation (20) reliant lesdites chambres de cylindre (5a, 5b) entre elles et un moyen (21) sensible à la vitesse, comprenant une vanne (22) dans la dérivation (20) commandant l'écoulement de fluide passant dans ladite dérivation (20) en fonction de la vitesse du véhicule, la vanne (22) comprenant un boîtier (25) ayant en son sein des premier et deuxième orifices (39, 42) connectés à la dérivation (20), le boîtier (25) ayant également en son sein un alésage (26) et une soupape de vanne (32) coulissant dans ledit alésage (26), le fluide sous pression provenant de ladite source étant dosé par ladite dérivation en fonction de la vitesse du véhicule, pour augmenter l'assistance motrice lors d'une diminution de la vitesse du véhicule et réduire la puissance motrice lors d'une augmentation de la vitesse de véhicule, caractérisé en ce que ladite soupape (32) a une gorge annulaire (41) qui communique avec ledit premier orifice (39) et ledit alésage (26) a une gorge annulaire (50) formée dans sa paroi, qui communique avec ledit deuxième orifice (42), ladite gorge annulaire (41) de la soupape coopérant avec ladite gorge annulaire (50) ménagée dans la paroi de l'alésage (26), pour doser l'écoulement de fluide sous pression via la vanne (22) et ainsi la dérivation (20), la soupape (32) étant sollicitée élastiquement dans une direction axiale, un solénoïde (52) étant monté dans le boîtier (25) pour agir sur la soupape (32), afin de provoquer un déplacement axial à l'encontre de ladite force de déplacement et des moyens (23, 24) pour mesurer la vitesse du véhicule et pour fournir une sortie électrique variable audit solénoïde, en fonction des vitesses variables du véhicule pour provoquer un déplacement axial de la soupape (32) en réponse à la vitesse du véhicule.

2. Mécanisme de direction selon la revendication 1, dans lequel la soupape (32) est déplacée vers une extrémité axiale du boîtier (25), le boîtier étant pourvu d'une vis de réglage (38) qui bute contre une extrémité de la soupape (32) près de ladite première extrémité axiale du boîtier, en vue de fournir un réglage de la position de la soupape.

3. Mécanisme de direction selon la revendication 1 ou 2, dans lequel la soupape (32) comprend un passage (47) la traversant axialement pour fournir une communication hydraulique entre les extrémités opposées de la soupape (32) et dans lequel une extrémité du boîtier (25) est pourvue d'un orifice (44) connecté à un réservoir, pour permettre une égalisation de pression à chaque extrémité de la soupape (32) et pour permettre un drain de fluide pressurisé depuis le boîtier (25).

4. Mécanisme de direction selon l'une quelconque des revendications précédentes, dans lequel ladite vanne de commande (7) comprend un premier orifice de cylindre (8) connecté par un premier passage de fluide (10) à l'une desdites chambre de cylindre (5a) et un deuxième orifice de cylindre (9) connecté par un deuxième passage de fluide (11) à l'autre desdites chambre de cylindre (5b) et dans lequel ladite dérivation (20) relie lesdits premier et deuxième passages de fluide (10, 11).

5. Mécanisme de direction selon la revendication 4, dans lequel ladite vanne de commande (7) est une vanne rotative ayant un orifice d'entrée (12) pouvant être relié à une source de fluide sous pression (13, 16), un orifice de sortie (15) pouvant être relié à un réservoir (16) pour le fluide sous pression et un rotor qui est déplaçable angulairement en réponse à des mouvements de direction de la commande de direction du véhicule pour doser le fluide sous pression provenant dudit orifice d'entrée (12) vers l'un desdits premier et deuxième orifice de cylindre (8, 9) et pour connecter l'autre desdits premier et deuxième orifices de cylindre (8, 9) audit orifice de sortie (15).

6. Véhicule pourvu d'un mécanisme de direction assistée selon l'une quelconque des revendications précédentes.
